# EUROPEAN PATENT SPECIFICATION

(11) **EP 4 100 277 B1**
(45) Date of publication and mention of the grant of the patent: **29.05.2024**
(21) Application number: 20703968.6
(22) Date of filing: 04.02.2020
(51) Int. Cl.: B60L 50/64, B60L 50/60, B60L 58/24

(54) **VEHICULAR ENERGY STORAGE MODULE, BATTERY PACK AND VEHICLE**
FAHRZEUGENERGIESPEICHERMODUL, AKKUMULATOR UND FAHRZEUG
MODULE DE STOCKAGE D'ÉNERGIE DE VEHICULE, BLOC-BATTERIE ET VÉHICULE

(43) Date of publication of application: 14.12.2022
(60) Divisional application: 24156458.2
(73) Proprietor: Volvo Penta Corporation, 405 08 Göteborg (SE)
(72) Inventor: ISAKSSON, Tor, 423 55 Torslanda (SE)
(74) Representative: Valea AB
(86) International application number: PCT/EP2020/052652
(87) International publication number: WO 2021/155906

(56) References cited:
- EP-B1- 3 131 161
- WO-A1-2018/215725
- US-A1- 2015 349 389
- US-A1- 2017 279 172
- US-A1- 2017 358 831
- US-B2- 9 490 465

## Description

### TECHNICAL FIELD

The disclosure relates to a battery module, a battery pack including multiple battery modules, and a vehicle including at least one such battery module.

### BACKGROUND

With an increasing demand for electrification of vehicles there is also a demand for secondary batteries having high electrical density for use in electric vehicles (EV) or hybrid electric vehicles (HEV). Secondary batteries are used as a power source both for auxiliary electrical systems and for traction batteries. In this context, the term "secondary battery" refers to a rechargeable battery, as opposed to a disposable primary battery.

Types of secondary batteries currently used include, for instance, lithium ion polymer batteries, nickel cadmium batteries, nickel hydrogen batteries, nickel zinc batteries and the like. The operating voltage of such a unit secondary battery cell, that is, a unit battery cell can vary from 1.5 V to 4.5 V depending on the type used. Therefore, when a higher output voltage is required, a battery module or a battery pack comprising several modules may be configured by connecting a plurality of battery cells in series. In addition, the battery pack may be configured by connecting a plurality of battery cells in parallel according to the charge and discharge capacity required for the battery pack. Therefore, the number of battery cells included in the battery module or battery pack may be variously set according to the required output voltage or charge/discharge capacity.

When configuring a battery pack by connecting a plurality of battery cells in series/parallel, a battery module including multiple battery cells is first configured, and other control circuit components are added to the at least one battery module. Multiple modules can be connected to configure a battery pack.

In the case of a conventional battery module, a heat sink for cooling the battery module is generally mounted separately outside the battery module. In general, such a heat sink is separately mounted to the bottom surface of the battery module to indirectly cool the battery module in order to maintain a preferred, stable operating temperature. Typically, battery modules are maintained at a temperature of about 25°C (+/-5°C) to ensure optimum conditions for the battery module.

However, the conventional heat sink structure that is separately mounted outside the battery module has a problem of low cooling efficiency when cooling a high specification battery module which is recently increased due to an indirect cooling method. A further problem is that every system added to a battery module or battery pack will increase its weight. WO2018/215725A1 discloses a battery assembly comprising at least two holding frames, reversibly held with respect to one another in a certain distance and in a closed condition by a fastening means. The holding frames hold a plurality of battery cells between them, which are in contact with a plurality of passive heat sinks.

The object of the invention is to provide an improved battery module that can achieve an improved cooling performance without a significant increase in weight. The object is further to provide a battery pack including such a battery module, and a vehicle including such a battery pack.

### SUMMARY

The above problems have been solved by a battery module, a battery pack and a vehicle as claimed in the appended claims.

In the subsequent text, the terms "module" or "battery module" are intended to describe an assembly of individual battery cells having a combined voltage up to about 100 V, suitable for powering auxiliary electric systems in a vehicle. The term "energy storage module" is intended to describe a battery module enclosed in an outer casing. Further, the terms "pack" or "battery pack" are intended to describe an assembly of battery modules or energy storage modules having a combined voltage of several hundred Volts, suitable for use as a vehicle traction battery. In this context, the term "vehicle" is intended to include both land vehicles and marine vessels.

According to the invention, the disclosure relates to a vehicular energy storage module comprising an outer casing having two parallel first and second side walls, parallel upper and lower walls, and opposing first and second ends. A battery module is housed inside the casing, which battery module includes a plurality of battery cell groups, or submodules. Each battery cell group includes at least two battery cells which are electrically interconnected to each other and arranged side-by-side between the side walls. Within the casing, each battery cell group is connected in parallel and several battery cell groups are connected in series, wherein the number of battery cells in each battery cell group and the number of battery cell groups in each module is selected to supply a desired battery module voltage.

According to the invention the battery module comprises multiple heat pipes, wherein each heat pipe comprises parallel first and second heat pipe sections connected by intermediate sections at their respective ends. The at least one heat pipe has a first heat pipe section electrically connected to the positive poles of a first battery cell group and a second heat pipe section electrically connected to the negative poles of an adjacent battery cell group. In addition, heat pipes are arranged in contact with positive and negative poles of adjacent battery cell groups on opposite sides of the battery module; wherein the battery cell groups making up the battery module are connected in series.

The at least one heat pipe provides both an electrical connection for parallel battery cells within a battery cell group as well as a series connection between adjacent battery cell groups. At the same time, the heat pipes provide an improved temperature distribution between adjacent battery cells in a battery cell group as well as between adjacent battery cell groups. This is an advantage in case of local heating occurring within one or more battery cells. This arrangement eliminates the need for separate wiring for this purpose which provides an improved temperature distribution without a substantial increase in weight. Further, the at least one heat pipe described above has an open substantially rectangular shape, made up of four individual sections. The provision of a rectangular heat pipe with a reduced cross-section allows for a further reduction in weight, as compared to a conventional heat pipe having a single, flat one-piece profile extending over all the positive and negative poles of two adjacent battery cell groups.

As indicated above, each heat pipe comprises parallel first and second heat pipe sections connected by intermediate sections at their respective ends. According to a first example, the first and second heat pipe sections and the two intermediate sections form a heat pipe. In this example, each individual section can comprise a separate heat pipe section, or all sections can be connected to form a continuous heat pipe. According to a second example, the first and second heat pipe sections are connected by hollow or solid intermediate sections comprising a heat conductive material.

As indicated above, the battery module is housed within a casing. According to a first example, the heat pipes located on opposite sides of the battery module are encased within the upper and lower walls of the casing to form an integral part of the casing. The casing consists of an electrically isolating material that prevents electrical contact between adjacent heat pipes. The material making up the casing can also be heat conductive, which provides a further improvement of the temperature distribution between adjacent heat pipes and improves the cooling properties of the casing by allowing heat to be radiated from the casing to the surroundings. According to a second example, the heat pipes and the opposing end portions of the battery cells throughout the module are encased within the upper and lower walls of the casing to form an integral part of the casing. This arrangement will not only improve the temperature distribution between adjacent heat pipes and the cooling properties of the casing but will also protect the heat pipes and the positive and negative poles from moisture and/or oxidation caused by corrosive chemicals or exposure to the ambient atmosphere.

A battery management unit (BMU) for monitoring and controlling the operation of the cells in the battery module can be mounted separate from the casing or be integrated in one of the walls making up the casing. Electrical wiring for connecting the module to electrical consumers in the vehicle, or to adjacent modules are preferable integrated in the casing.

According to the invention not covered by the claims the at least one heat pipe has at least one intermediate section thermally coupled to an active or a passive heat sink located in at least one side wall of the casing, wherein the heat pipe is arranged to channel heat from the battery cells to the casing via the heat pipe. In this context, the term "thermally coupled" implies that the components are placed sufficiently close together to allow heat transfer. In this example, the components are not in physical contact in order to avoid an electrical connection between two heat pipes via the heat sink. According to the invention, the at least one heat pipe has at least one intermediate section thermally coupled to at least one passive heat sink encased within a side wall in the casing. Heat sinks thermally coupled to heat pipes can be provided in both side walls on opposite sides of the casing. In a preferred example, a heat sink can be thermally coupled to the intermediate sections of each heat pipe. In an alternative example, a heat sink can be thermally coupled to the ends of a pair of intermediate sections on two adjacent heat pipes. The heat sink can be a passive heat sink in the form of a metal plate, made from copper or a similar suitable heat conducting metal. This arrangement will improve the temperature distribution between adjacent heat pipes and the cooling properties of the casing.

According to the invention the casing has two parallel first and second side walls, parallel upper and lower walls, and opposing first and second ends. According to the invention, the casing is open at the first and second ends, wherein the first and second side walls, and the upper and lower walls form a rectangular conduit with an open cavity through which a cooling fluid can be passed. According to an alternative example, the casing can be provided with end closures at the first and second ends, wherein the end closures are provided with couplings connectable to a source of cooling fluid. A non-exhaustive list of cooling fluids that can be used for this purpose includes ambient air or a suitable inert gas, e.g. nitrogen. In cases where the cells are electrically isolated from the cavity it is possible to use a liquid coolant.

As indicated above, the casing can consist of a heat conductive and electrically isolating material. A suitable material for this purpose is a potting compound. A non-exhaustive list of compounds for use in a casing of this type includes epoxy, silicone, and urethane potting compounds.

According to a second aspect, the disclosure further relates to a battery pack comprising a battery box containing multiple energy storage modules as described above.

According to a third aspect, the disclosure further relates to a vehicle provided with a battery pack comprising multiple vehicular energy storage modules as described above.

An advantage of the disclosure is that the heat pipes provide an improved temperature distribution between adjacent battery cells in a battery cell group as well as between adjacent battery cell groups. This provides for improved cooling and heat distribution in case of local heating occurring within one or more battery cells. The use of heat pipes for connecting battery cells and battery groups eliminates the need for separate wiring for this purpose and allows for an improved temperature distribution without a substantial increase in weight. Further, the heat pipes described above have an open substantially rectangular shape, made up of four individual sections. The provision of a rectangular heat pipe with a corresponding reduced cross-section allows for a further reduction in weight, as compared to a conventional heat pipe having a single, flat one-piece profile extending over all the positive and negative poles of two adjacent battery cell groups.

By providing a casing consisting of an electrically isolating material, electrical contact between adjacent heat pipes is prevented. The material making up the casing is also heat conductive, which provides a further improvement of the temperature distribution between adjacent heat pipes and improves the cooling properties of the casing by allowing heat to be radiated from the casing to the surroundings.

A further advantage is to arrange for the heat pipes and the opposing end portions of the battery cells throughout the module to be encased within the upper and lower walls of the casing to form an integral part of the casing. This arrangement will not only improve the temperature distribution between adjacent heat pipes and the cooling properties of the casing, but will also completely enclose and protect the heat pipes and the positive and negative poles from moisture and/or oxidation caused by corrosive chemicals or exposure to the ambient atmosphere.

It is also advantageous to locate active or passive heat sinks within at least one side wall of the casing. In this way, the heat pipes are arranged to channel heat from the battery cells to the casing via the heat pipe. This arrangement will further improve the temperature distribution between adjacent heat pipes and the cooling properties of the casing.

### DRAWING FIGURES

In the following text, the disclosure will be described in detail with reference to the attached drawings. These schematic drawings are used for illustration only and do not in any way limit the scope of the invention. In the drawings:
- Figure 1A: shows a schematically indicated first vehicle with a battery pack;
- Figure 1B: shows a schematically indicated second vehicle with a battery pack;
- Figure 2: shows a schematic perspective view of an energy storage module;
- Figure 3: shows an exploded view of the energy storage module in Figure 2;
- Figure 4: shows a schematic side view of the energy storage module in Figure 2; and
- Figure 5: shows a schematic end view of the energy storage module in Figure 2.

### DESCRIPTION OF EMBODIMENTS AND EXAMPLES

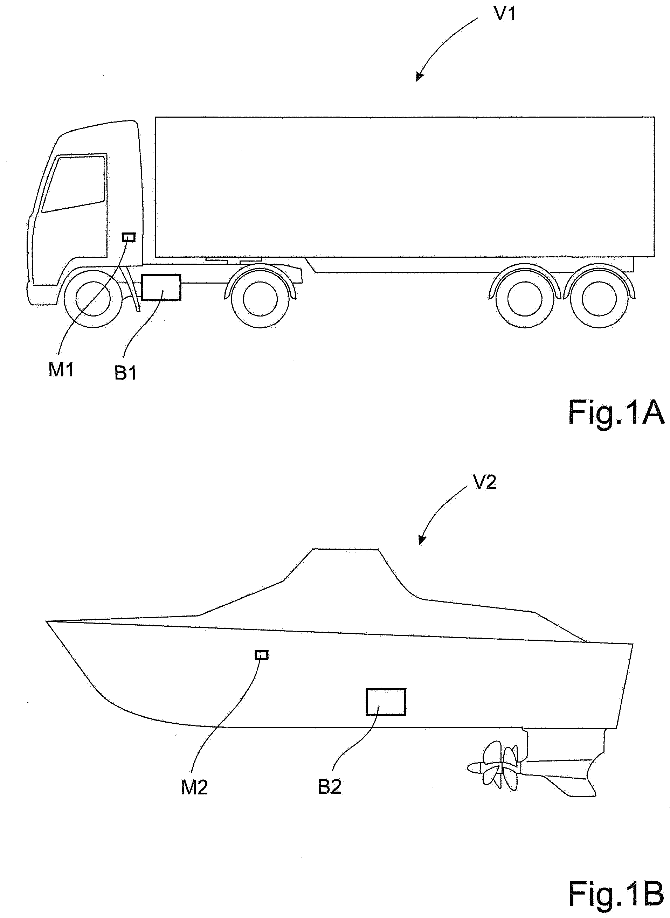

Figure 1A shows a schematically indicated first vehicle V1 in the form of a truck provided with a battery pack B1. Figure 1B shows a schematically indicated second vehicle V2 in the form of a marine vessel provided with a battery pack B2. The battery packs B1 and B2 indicated in the figures are high voltage traction batteries comprising multiple energy storage modules, which will be described in detail below. The vehicles V1, V2 can also comprise a single energy storage module M1, M2 used for powering auxiliary electrical devices.

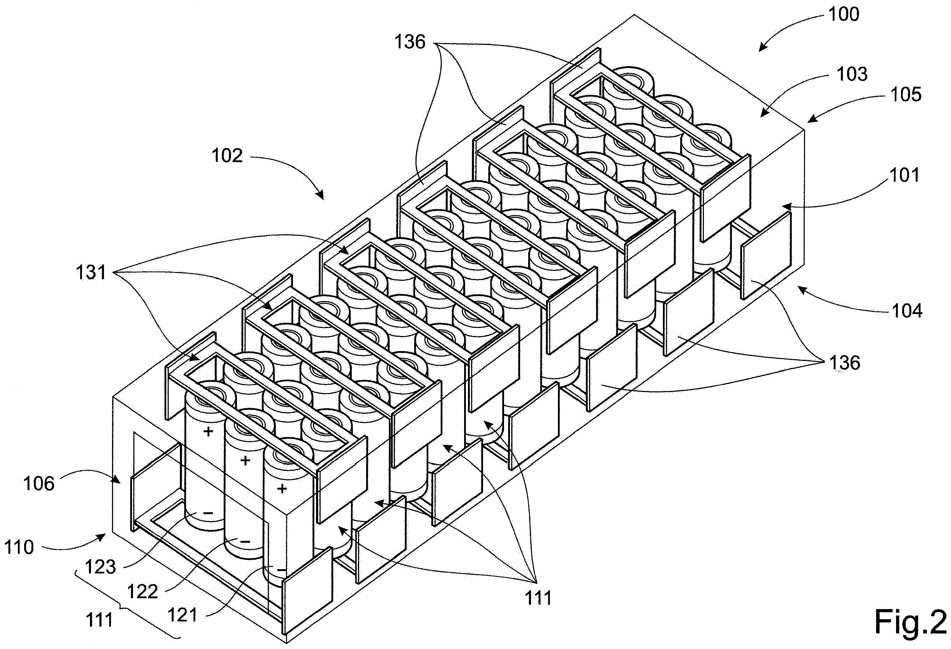

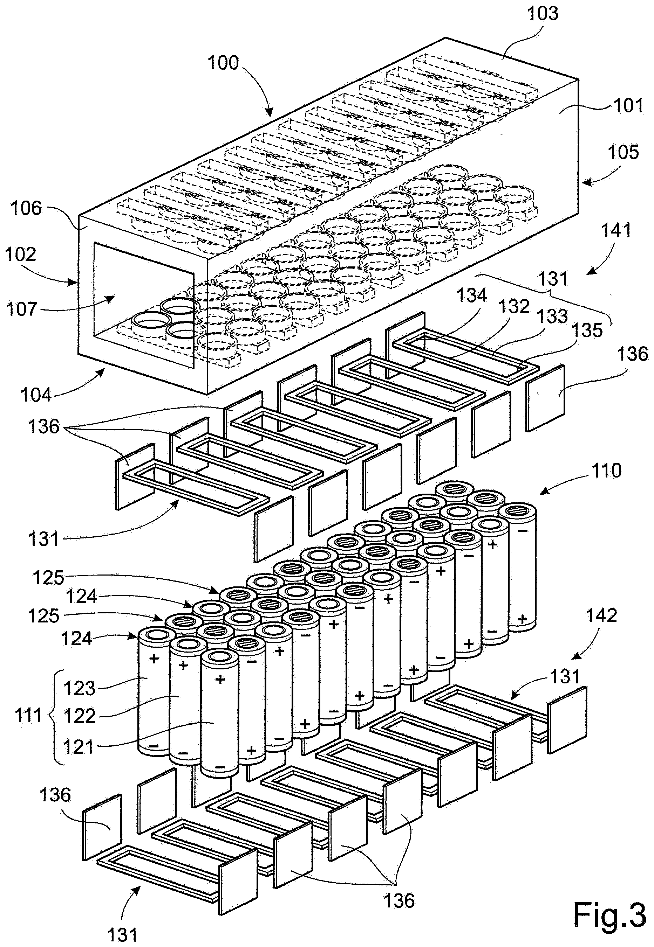

Figure 2 shows a schematic diagram of a vehicular energy storage module comprising an outer casing 100 having two parallel first and second side walls 101, 102, parallel upper and lower walls 103, 104, and opposing first and second ends 105, 106. The casing 100 is only schematically indicated in Figure 2, in order to show the enclosed component parts. The casing 100 encloses a battery module 110 which battery module includes a plurality of battery cell submodules 111, or battery cell groups. In this example, each battery cell group 111 includes three battery cells 121, 122, 123 which are electrically interconnected to each other and arranged side-by-side between the side walls 101, 102. As indicated in Figures 2 and 3, adjacent battery groups 111 are arranged with their positive poles in opposite directions.

The battery module 110 comprises multiple heat pipes 131, wherein each heat pipe 131 comprises parallel first and second heat pipe sections 132, 133 connected by intermediate sections 134, 135 at their respective ends (see Fig. 3). In this way, the heat pipes form the outline of a rectangle. The heat pipes 131 shown in Figures 2 and 3 have a first heat pipe section 132 electrically connected to the positive poles 124 of a first battery cell group 111 and a second heat pipe section 133 electrically connected to the negative poles 125 of an adjacent battery cell group 111. This arrangement allows the first and second heat pipe sections 132, 133 to connect battery cells 121, 122, 123 in each battery cell group 111 in parallel throughout the battery module 110. Further, heat pipes 131 are arranged in contact with positive and negative poles of adjacent battery cell groups 111 on opposite sides of the battery module 110, wherein the battery cell groups 111 making up the battery module 110 are connected in series throughout the battery module 110. As can be seen in Figures 2 and 3, one heat pipe at either end of the lower wall 104 of the battery module 110 will only be in contact with a single battery cell group 111.

Figure 2 further indicates that opposite intermediate sections 134, 135 of each heat pipe 131 are thermally coupled to a heat sink 136 in a respective side wall, wherein the heat pipe is arranged to channel heat from the battery cells to the casing. Heat is conducted directly into the upper and lower walls by the heat pipes 131 and indirectly into the side walls 101,102 via the heat sinks 136. According to an alternative example, the ends of opposite intermediate sections 134, 135 on two adjacent heat pipe 131 can be thermally coupled to a common heat sink 136.

Figure 3 shows an exploded view of the energy storage module in Figure 2. In the example indicated in Figure 2 the heat pipes 131 and opposing end portions of the battery cells 121, 122, 123 are encased within the upper and lower walls 103, 104 of the casing 100 to form an integral part thereof. In Figure 3 the internal component parts normally integrated in the casing 100 have been removed for clarity reasons. As described in Figure 2, the casing 100 comprises two parallel first and second side walls 101, 102, parallel upper and lower walls 103, 104, and opposing first and second ends 105, 106. As indicated by dashed lines in the casing 100, the heat pipes and opposed ends of the battery cells are encased within the upper and lower walls 103, 104 to form an integral part of the casing 100.

A battery management unit (not shown) for monitoring and controlling the operation of the cells in the battery module can be mounted integrated in one of the walls making up the casing. Similarly, electrical wiring for connecting the module to electrical consumers in the vehicle, or to adjacent modules are preferable integrated in the casing. The electrical wiring is connected to external contacts or sockets (not shown) on the outer surface of the casing.

The exploded view in Figure 3 shows that each battery cell group 111 includes three battery cells 121, 122, 123 arranged side-by-side and where adjacent battery groups 111 are arranged with their positive poles 124 (+) and negative poles 125 (-) arranged alternately in opposite directions. The figure further shows an upper set 141 and a lower set 142 of heat pipes 131 arranged on opposite sides of the battery cell assembly in the battery module 110. Each heat pipe 131 comprises parallel first and second heat pipe sections 132, 133 connected by intermediate sections 134, 135 at their respective ends. In this way, the sections form a continuous heat pipe having the outline of a rectangle. This arrangement provides a relatively light heat pipe, as opposed to a single solid rectangular body. The heat pipes 131 shown in Figure 3 have a first heat pipe section 132 electrically connected to the positive poles 124 of a first battery cell group 111 and a second heat pipe section 133 electrically connected to the negative poles 125 of an adjacent battery cell group 111. The respective intermediate sections 134, 135 at opposite ends of each heat pipe 131 are thermally coupled to a heat sink 136, wherein the heat pipe is arranged to channel heat from the battery cells to the side walls of the casing 101, 102. In this example, each heat sink 136 is thermally connected to the intermediate sections 134, 135 of each heat pipe 131.

According to an alternative example, each heat sink 136 can be thermally connected to the ends of intermediate sections 134, 135 of two adjacent heat pipes. In this example, one heat sink 136 at either end of the upper wall 103 of the battery module 110 will only be thermally coupled to the intermediate section of a single heat pipe 131.

As indicated in Figure 2 above, the heat pipes 131 with their intermediate sections 134, 135 are thermally coupled to passive heat sinks 136 encased within the side walls of the casing. The heat sinks 136 shown in these examples are metal plates made from e.g. copper. In order to prevent leakage currents through the casing 100, the casing consists of a heat conductive and electrically isolating material. A suitable material for this purpose is a potting compound.

Figure 3 further shows that the casing 100 with its first and second side walls 101, 102, and upper and lower walls (103, 104) form an open conduit or cavity 107 through the first and second ends 105, 106 of the casing. This cavity 107 allows a flow of cooling fluid to pass through he casing 100 in order to cool the battery module 110 located therein. According to an alternative example (not shown), the casing 100 can be provided with end closures at the first and second ends 105, 106, wherein the end closures can be provided with couplings connected to a source of cooling fluid.

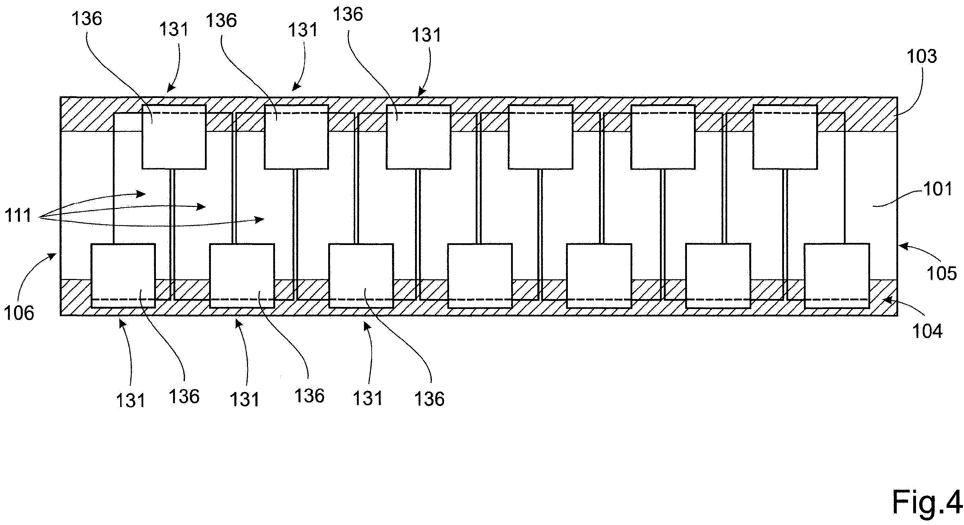

Figure 4 shows a schematic side view of the energy storage module in Figure 2. Figure 4 indicates how the heat pipes 131 and opposed ends of the battery cells 111 are encased within the upper and lower walls 103, 104 to form an integral part of the casing 100. The figure further indicates that the heat sinks 136 are thermally connected to the intermediate section 135 of each heat pipe 131. According to an alternative example, the heat sinks 136 can be thermally connected to the ends of the intermediate section 135 of two adjacent heat pipes 131.

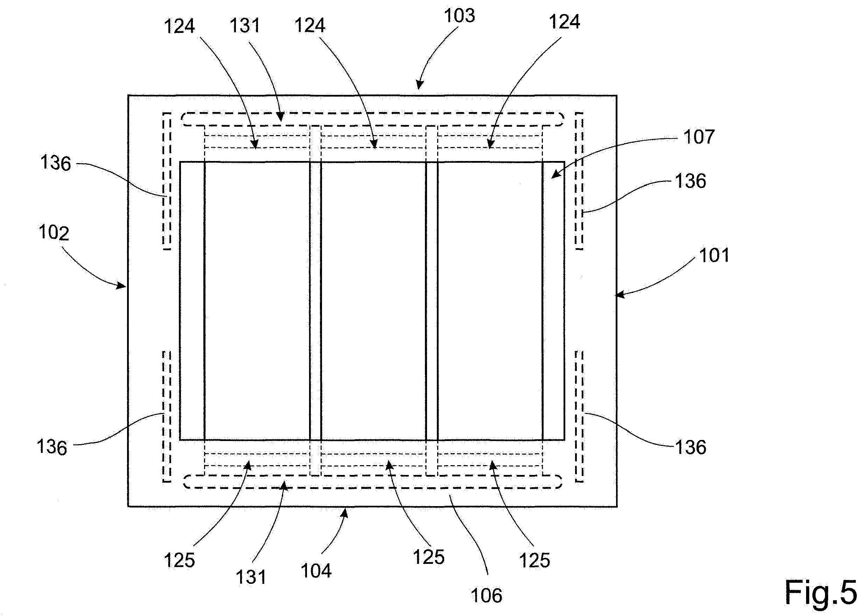

Figure 5 shows a schematic end view of the energy storage module in Figure 2. Figure 5 Indicates how the heat pipes 131 and opposed positive poles 124 and negative poles 125 of the battery cells 111 in a battery cell group are electrically connected, as well as being encased within the upper and lower walls 103, 104 to form an integral part of the casing 100. The figure further indicates how the heat sinks 136 are thermally connected to the intermediate sections 134, 135 of each heat pipe 131.

The disclosure should not be deemed to be limited to the embodiments described above, but rather a number of further variants and modifications are conceivable within the scope of the following patent claims.

## Claims

1. A vehicular energy storage module, comprising
- an outer casing (100) having two parallel first and second side walls (101, 102), parallel upper and lower walls (103, 104), and opposing first and second ends (105, 106);
- a battery module (110) housed inside the casing (100), the battery module including:
- a plurality of battery cell groups (111), where each battery cell group includes at least two battery cells (121, 122, 123) which are electrically interconnected to each other and arranged side-by-side between the side walls (101, 102);
**characterized in**
- **that** the battery module (110) comprises multiple heat pipes (131), wherein each heat pipe (131) comprises parallel first and second heat pipe sections (132, 133) connected by intermediate sections (134, 135) at their respective ends;
- **that** at least one heat pipe has a first heat pipe section (132) electrically connected to the positive poles (124) of a first battery cell group (111) and a second heat pipe section (133) electrically connected to the negative poles (125) of an adjacent battery cell group (111);
- **that** heat pipes (131) are arranged in contact with positive and negative poles of adjacent battery cell groups (111) on opposite sides of the battery module (110); wherein the battery cell groups (111) making up the battery module (110) are connected in series,
- **that** the intermediate sections (134, 135) of each heat pipe are thermally coupled to at least one passive heat sink (136) encased within a side wall in the casing, and
- **that** the casing (100) is open at the first and second ends (105, 106), wherein the first and second side walls (101, 102), and the upper and lower walls (103, 104) form a conduit for a cooling fluid..

2. A vehicular energy storage module according to claim 1,
**characterized in that**
the at least one heat pipe (131) has a rectangular shape.

3. A vehicular energy storage module according to claim 1 or 2
**characterized in**
**that** the first and second heat pipe sections (132, 133) and the intermediate sections (134, 135) form a single heat pipe.

4. A vehicular energy storage module according to claim 1 or 2
**characterized in**
**that** first and second heat pipe sections (132, 133) are connected by intermediate sections (134, 135) comprising a heat conductive material.

5. A vehicular energy storage module according to any one of claims 1-4,
**characterized in that** heat pipes (131) are encased within the upper and lower walls (103, 104) to form an integral part of the casing (100).

6. A vehicular energy storage module according to any one of claims 1-4,
**characterized in that** heat pipes (131) and opposing end portions of the battery cells (121, 122, 123) are encased within the upper and lower walls (103, 104) to form an integral part of the casing (100).

7. A vehicular energy storage module according to any one of the preceding claims, **characterized in that** the heat sink (136) is thermally connected to the intermediate sections (134, 135) at opposite ends of each heat pipe (131).

8. A vehicular energy storage module according to any one of the preceding claims, **characterized in that** the heat sink (136) is a metal plate.

9. A vehicular energy storage module according to any one of the preceding claims,
**characterized in that** that the casing (100) consists of a heat conductive and electrically isolating material.

10. A vehicular energy storage module according to any one of the preceding claims,
**characterized in that** the casing (100) consists of a potting compound.

11. A battery pack **characterized in that** the battery pack comprises multiple vehicular energy storage modules according to claim 1.

12. A vehicle **characterized in that** the vehicle is provided with a battery pack comprising multiple vehicular energy storage modules according to claim 1.

## Patentansprüche

1. Fahrzeugbezogenes Energiespeichermodul, umfassend
- ein Außengehäuse (100), das zwei parallele erste und zweite Seitenwände (101, 102), eine parallele obere und untere Wand (103, 104) und entgegengesetzte erste und zweite Enden (105, 106) aufweist;
- ein Batteriemodul (110), das in dem Gehäuse (100) untergebracht ist, wobei das Batteriemodul einschließt:
- eine Vielzahl von Batteriezellengruppen (111), wobei jede Batteriezellengruppe mindestens zwei Batteriezellen (121, 122, 123) einschließt, die miteinander elektrisch verbunden und zwischen den Seitenwänden (101, 102) nebeneinander angeordnet sind;
**dadurch gekennzeichnet, dass**
- das Batteriemodul (110) mehrere Wärmerohre (131) umfasst, wobei jedes Wärmerohr (131) einen parallelen ersten und zweiten Wärmerohrbereich (132, 133) umfasst, die durch Zwischenbereiche (134, 135) an ihren jeweiligen Enden verbunden sind;
- **dass** mindestens ein Wärmerohr einen ersten Wärmerohrbereich (132), der mit den positiven Polen (124) einer ersten Batteriezellengruppe (111) elektrisch verbunden ist, und einen zweiten Wärmerohrbereich (133) aufweist, der mit den negativen Polen (125) einer angrenzenden Batteriezellengruppe (111) elektrisch verbunden ist;
- **dass** Wärmerohre (131) in Kontakt mit positiven und negativen Polen angrenzender Batteriezellengruppen (111) auf gegenüberliegenden Seiten des Batteriemoduls (110) angeordnet sind; wobei die Batteriezellengruppen (111), die das Batteriemodul (110) ausmachen, in Reihe geschaltet sind,
- **dass** die Zwischenbereiche (134, 135) jedes Wärmerohrs mit mindestens einer passiven Wärmesenke (136) thermisch gekoppelt sind, die innerhalb einer Seitenwand in dem Gehäuse eingehaust ist, und
- **dass** das Gehäuse (100) an den ersten und den zweiten Enden (105, 106) offen ist, wobei die ersten und die zweiten Seitenwände (101, 102) und die obere und untere Wand (103, 104) eine Leitung für ein Kühlfluid ausbilden.

2. Fahrzeugbezogenes Energiespeichermodul nach Anspruch 1, **dadurch gekennzeichnet, dass** das mindestens eine Wärmerohr (131) eine rechteckige Form aufweist.

3. Fahrzeugbezogenes Energiespeichermodul nach Anspruch 1 oder 2, **dadurch gekennzeichnet, dass** der erste und der zweite Wärmerohrbereich (132, 133) und die Zwischenbereiche (134, 135) ein einzelnes Wärmerohr ausbilden.

4. Fahrzeugbezogenes Energiespeichermodul nach Anspruch 1 oder 2, **dadurch gekennzeichnet, dass** ein erster und ein zweiter Wärmerohrbereich (132, 133) durch Zwischenbereiche (134, 135) verbunden sind, umfassend ein wärmeleitfähiges Material.

5. Fahrzeugbezogenes Energiespeichermodul nach einem der Ansprüche 1 bis 4, **dadurch gekennzeichnet, dass** Wärmerohre (131) innerhalb der oberen und der unteren Wand (103, 104) eingehaust sind, um einen integralen Teil des Gehäuses (100) auszubilden.

6. Fahrzeugbezogenes Energiespeichermodul nach einem der Ansprüche 1 bis 4, **dadurch gekennzeichnet, dass** Wärmerohre (131) und entgegengesetzte Endabschnitte der Batteriezellen (121, 122, 123) innerhalb der oberen und der unteren Wand (103, 104) eingehaust sind, um einen integralen Teil des Gehäuses (100) auszubilden.

7. Fahrzeugbezogenes Energiespeichermodul nach einem der vorstehenden Ansprüche, **dadurch gekennzeichnet, dass** die Wärmesenke (136) an gegenüberliegenden Enden jedes Wärmerohrs (131) mit den Zwischenbereichen (134, 135) thermisch verbunden ist.

8. Fahrzeugbezogenes Energiespeichermodul nach einem der vorstehenden Ansprüche, **dadurch gekennzeichnet, dass** die Wärmesenke (136) eine Metallplatte ist.

9. Fahrzeugbezogenes Energiespeichermodul nach einem der vorstehenden Ansprüche, **dadurch gekennzeichnet, dass** das Gehäuse (100) aus einem wärmeleitfähigen und elektrisch isolierenden Material besteht.

10. Fahrzeugbezogenes Energiespeichermodul nach einem der vorstehenden Ansprüche, **dadurch gekennzeichnet, dass** das Gehäuse (100) aus einer Vergussmasse besteht.

11. Batteriepack, **dadurch gekennzeichnet, dass** der Batteriepack mehrere fahrzeugbezogene Energiespeichermodule nach Anspruch 1 umfasst.

12. Fahrzeug, **dadurch gekennzeichnet, dass** das Fahrzeug mit einem Batteriepack versehen ist, umfassend mehrere fahrzeugbezogene Energiespeichermodule nach Anspruch 1.

## Revendications

1. Module de stockage d'énergie pour véhicule, comprenant
- un boîtier extérieur (100) ayant deux première et seconde parois latérales parallèles (101, 102), des parois supérieure et inférieure parallèles (103, 104) et de première et seconde extrémités opposées (105, 106) ;
- un module de batterie (110) logé à l'intérieur du boîtier (100), le module de batterie comportant :
- une pluralité de groupes d'éléments de batterie (111), où chaque groupe d'éléments de batterie comporte au moins deux éléments de batterie (121, 122, 123) qui sont reliés électriquement entre eux et agencés côte à côte entre les parois latérales (101, 102) ;
**caractérisé en ce que**
- le module de batterie (110) comprend de multiples caloducs (131), dans lequel chaque caloduc (131) comprend de première et seconde sections de caloduc parallèles (132, 133) reliées par des sections intermédiaires (134, 135) au niveau de leurs extrémités respectives ;
- au moins un caloduc a une première section de caloduc (132) connectée électriquement aux pôles positifs (124) d'un premier groupe d'éléments de batterie (111) et une seconde section de caloduc (133) connectée électriquement aux pôles négatifs (125) d'un groupe d'éléments de batterie adjacent (111) ;
- des caloducs (131) sont agencés en contact avec des pôles positif et négatif des groupes d'éléments de batterie adjacents (111) sur des côtés opposés du module de batterie (110) ; dans lequel les groupes d'éléments de batterie (111) composant le module de batterie (110) sont connectés en série,
- les sections intermédiaires (134, 135) de chaque caloduc sont couplées thermiquement à au moins un dissipateur thermique passif (136) encastré dans une paroi latérale du boîtier, et
- le boîtier (100) est ouvert au niveau des première et seconde extrémités (105, 106), dans lequel les première et seconde parois latérales (101, 102), et les parois supérieure et inférieure (103, 104) forment un conduit pour un fluide de refroidissement.

2. Module de stockage d'énergie pour véhicule selon la revendication 1,
**caractérisé en ce que**
l'au moins un caloduc (131) a une forme rectangulaire.

3. Module de stockage d'énergie pour véhicule selon la revendication 1 ou 2, **caractérisé en ce que** les première et seconde sections de caloduc (132, 133) et les sections intermédiaires (134, 135) forment un seul caloduc.

4. Module de stockage d'énergie pour véhicule selon la revendication 1 ou 2, **caractérisé en ce que** les première et seconde sections de caloduc (132, 133) sont reliées par des sections intermédiaires (134, 135) comprenant un matériau conducteur de chaleur.

5. Module de stockage d'énergie pour véhicule selon l'une des revendications 1 à 4,
**caractérisé en ce que** des caloducs (131) sont encastrés dans les parois supérieure et inférieure (103, 104) pour former une partie intégrante du boîtier (100).

6. Module de stockage d'énergie pour véhicule selon l'une des revendications 1 à 4,
**caractérisé en ce que** des caloducs (131) et des parties d'extrémité opposées des éléments de batterie (121, 122, 123) sont encastrés dans les parois supérieure et inférieure (103, 104) pour former une partie intégrante du boîtier (100).

7. Module de stockage d'énergie pour véhicule selon l'une quelconque des revendications précédentes,
**caractérisé en ce que** le dissipateur thermique (136) est relié thermiquement aux sections intermédiaires (134, 135) au niveau d'extrémités opposées de chaque caloduc (131).

8. Module de stockage d'énergie pour véhicule selon l'une quelconque des revendications précédentes,
**caractérisé en ce que** le dissipateur thermique (136) est une plaque métallique.

9. Module de stockage d'énergie pour véhicule selon l'une quelconque des revendications précédentes,
**caractérisé en ce que** le boîtier (100) est constitué d'un matériau conducteur de chaleur et isolant électrique.

10. Module de stockage d'énergie pour véhicule selon l'une quelconque des revendications précédentes,
**caractérisé en ce que** le boîtier (100) est constitué d'un composé d'enrobage.

11. Bloc-batterie, **caractérisé en ce que** le bloc-batterie comprend de multiples modules de stockage d'énergie pour véhicule selon la revendication 1.

12. Véhicule, **caractérisé en ce que** le véhicule est équipé d'un bloc-batterie comprenant de multiples modules de stockage d'énergie pour véhicule selon la revendication 1.
